# EUROPÄISCHE PATENTSCHRIFT

(11) **EP 1 452 359 B1**
(45) Veröffentlichungstag und Bekanntmachung des Hinweises auf die Patenterteilung: **18.06.2008**
(21) Anmeldenummer: 04100408.6
(22) Anmeldetag: 04.02.2004
(51) Int. Cl.: B60H 1/34

(54) **Luftausströmer**
Air outlet nozzle
Buse de sortie d'air

(30) Priorität: 27.02.2003 EP 03100486; 03.03.2003 GB 0304791
(43) Veröffentlichungstag der Anmeldung: 01.09.2004
(73) Patentinhaber: Ford Global Technologies, LLC, Dearborn, MI 48126 (US)
(72) Erfinder: Karadia, Narendra, LE2 3DF, Knighton (GB)
(74) Vertreter: Drömer, Hans-Carsten

(56) Entgegenhaltungen:
- WO-A-98/29272
- WO-A-02/100669
- DE-C- 3 927 217
- DE-U- 20 200 605
- DE-U- 20 203 852
- US-A- 4 915 021
- US-A- 5 350 555

## Beschreibung

Die Erfindung betrifft einen Luftausströmer, insbesondere für einen Fahrzeuginnenraum, gemäß dem Oberbegriff des Anspruches 1. Typischerweise ist der Luftausströmer im Armaturenbrett des Fahrzeugs untergebracht.

Aus der WO 01/08912 und aus der WO 02/100669 sind Luftausströmer mit einem Luftaustritt bekannt, in dem Lamellen schwenkbar angeordnet sind, wobei die Lamellen in eine den Luftaustritt schließende Stellung schwenkbar sind. Die Lamellen sind so bemessen, daß sie in geschlossener Stellung den Luftaustritt vollständig schließen. Dabei entsteht durch die geschlossenen Lamellen eine optisch ansprechende, überwiegend glatte Oberfläche, was bei der geschlossenen Stellung aus ästhetischen Gründen erwünscht ist. Soll jedoch Luft aus dem Luftausströmer austreten, müssen die Lamellen geschwenkt werden, damit die Luft zwischen den Lamellen durchtreten kann. Neben dem notwendigen Bedienaufwand für die Verschwenkung ist ein weiterer Nachteil, daß der ästhetische Eindruck der vormals glatten Oberfläche gestört ist.

Aus der DE 202 03 852 U1 ist ein Luftausströmer mit schwenkbaren Lamellen bekannt, die Löcher für den Durchtritt von Luft aufweisen. Hierdurch wird bei geschlossener Stellung der Lamellen ein diffuser Luftaustritt ermöglicht. Aufgrund der Durchtrittslöcher erhalten die Lamellen allerdings eine siebartige Optik. Ferner ist der Herstellungsaufwand für gelochte Lamellen höher als für ungelochte. Des Weiteren haben die engen Durchtrittslöcher einen hohen Strömungswiderstand und eine Neigung zur Verschmutzung, wobei sie schlecht zu säubern sind.

Aufgabe der Erfindung ist es deshalb, einen Luftausströmer so weiterzubilden, daß zumindest bei kleinem Luftbedarf die Lamellen nicht verschwenkt werden müssen, und der optische Eindruck der geschlossenen Lamellen nicht gestört ist.

Aus der US 4915021 ist ein Luftausströmer für einen Fahrzeuginnenraum bekannt, in dessen Luftaustritt schwenkbare Lamellen angeordnet sind, wobei die Lamellen in eine den Luftaustritt schließende Stellung schwenkbar sind. Dabei sind die Lamellen so geformt, daß in der geschlossenen Stellung der Lamellen mehrere Lüftungsöffnungen vorhanden sind, die nicht durch Lamellen verschlossen sind. Zum Teil sind diese Lüftungsöffnungen zwischen den Lamellen als Schlitze, zum Teil auch als Schlitze in den Lamellen selber ausgeführt. Nachteilig ist hier, daß die Luftzufuhr über den Luftaustritt in den Fahrzeuginnenraum bei geschlossener Stellung der Lamellen nicht vollständig am Luftausströmer selber unterbunden werden kann.

Gelöst wird diese Aufgabe mit den Merkmalen des Anspruches 1.

Indem in geschlossener Stellung der Lamellen zumindest eine Lüftungsöffnung vorhanden ist, die nicht durch Lamellen verschlossen wird, können die Lamellen zumindest bei geringem Luftbedarf geschlossen bleiben. Die Luftzufuhr, z. B. in den Innenraum eines Kraftfahrzeuges, erfolgt dann ausschließlich über die zusätzliche Lüftungsöffnung bzw. Lüftungsöffnungen. Dies kann vorteilhaft z. B. bei der Zwangsbelüftung eines Innenraumes angewendet werden. Ohne daß die Lamellen geöffnet werden müssen, kann eine gewisse Luftmenge durch die Lüftungsöffnungen aus dem Luftaustritt strömen, wobei der Benutzer aufgrund der geringen Luftmenge nicht durch einen Luftzug gestört wird, weder akustisch noch physisch. Als Luftmenge ist hier die Menge an Luft zu verstehen, die innerhalb einer gewissen Zeiteinheit durch den Luftaustritt strömt.

Gemäß einer ersten Ausführungsform wird eine Lüftungsöffnung gebildet, indem eine Lamelle einen Bereich aufweist mit einer Breite, die kleiner ist als der von ihr zu verschließende Bereich des Luftaustritts. Dadurch entstehen die Lüftungsöffnungen zwischen Lamellen oder zwischen Lamellen und Gehäuse des Luftausströmers, jeweils in Form eines Lüftungsschlitzes bzw. Lüftungsspaltes. Dabei kann die Breite der einzelnen Lamelle - über ihre Länge gesehen - abschnittsweise oder kontinuierlich variieren, d. h. die Lüftungsschlitze und -spalte können eine geringere Länge als die Länge der Lamellen aufweisen. Zudem können eine oder mehrere Lamellen eine geringere Breite aufweisen, gegebenenfalls auf unterschiedlicher Länge der Lamellen. Weiterhin müssen die Schlitze keine parallelen Ränder aufweisen, vielmehr können die Lamellen im Bereich der Lüftungsöffnungen jede beliebige Berandung aufweisen, z. B. sind die Schlitze wellenförmig, oder sie laufen konisch zu.

Gemäß einer zweiten Ausführungsform ist eine Lüftungsöffnung gebildet, indem eine Lamelle kürzer ist als die Breite des Luftaustritts im von der Lamelle zu verschließenden Bereich des Luftaustritts. Dann wird die Lüftungsöffnung als Spalt zwischen Gehäuse und Lamellenstirnseite gebildet.

Die Luftzufuhr kann automatisch geregelt sein, indem z. B. die automatische Klimaanlage eines Fahrzeuges selbsttätig dem Luftausströmer eine gewisse Luftmenge zuführt, intervallmäßig oder abhängig von der Zusammensetzung der Luftbestandteile im zu belüftenden Raum. Oder die Luftzufuhr kann ständig erfolgen, indem z.B. ständig eine Grund-Luftmenge dem Luftausströmer zugeführt wird. Oder die Luftzuführung wird vom Benutzer veranlaßt, z. B. als "leichte Belüftungsstufe". Neben der nicht notwendigen Verschwenkung der Lamellen ist der weitere erfindungsgemäße Vorteil, daß der optische Eindruck der geschlossenen Lamellen nicht gestört wird, da diese trotz der durch die Lüftungsöffnungen strömenden Luftmenge geschlossen bleiben können.

In einer bevorzugten Ausführung ist eine (weitere) Lüftungsöffnung durch eine Ausnehmung an zumindest einer Lamelle gebildet. Eine Ausnehmung kann ein Loch oder ein beliebig geformter Ausschnitt, z. B. ein Längsschlitz, in der Lamelle sein. Natürlich ist die Anzahl der Ausnehmungen auf einer Lamelle beliebig. Ebenso kann nur eine Lamelle, oder ein Teil der Lamellen, oder alle Lamellen Ausnehmungen aufweisen. Die Ausnehmungen sind so gestaltet, daß die oben beschriebene Funktion der Lüftung bei geschlossener Stellung der Lamellen ausreichend erfüllt wird.

Die Lamellen können sowohl horizontal als auch vertikal oder unter einem beliebigen Winkel angeordnet sein, je nachdem welche Anforderungen bezüglich Funktionalität und Optik an den Luftausströmer gestellt werden.

Vorzugsweise ist jede Lamelle individuell drehbar gelagert. Ferner können Luftleitelemente stromaufwärts der Lamellen angeordnet sein, um die Richtung des Luftflusses zu kontrollieren.

Bevorzugt ist am Luftausströmer eine Verschlußklappe zur Regelung der Luftzufuhr zum Luftaustritt vorhanden. Mittels der Verschlußklappe können am Luftausströmer verschiedene Zustände der Belüftung eingestellt werden. Es können Verschlußklappe und Lamellen geschlossen sein. In diesem Fall tritt gar keine Luft aus dem Luftausströmer aus. Oder die Verschlußklappe ist geöffnet, und die Lamellen sind geschlossen. In einem solchen Fall liegt der oben beschriebene Zustand der Belüftung mit einer gewissen, geringen Luftmenge vor. Über die Stellung der Verschlußklappe kann auch diese geringe Luftmenge geregelt werden. Oder Verschlußklappe und Lamellen sind beide geöffnet. Dies entspricht der normalen Belüftungsstellung, wenn ein große Luftmenge austritt. Dabei wird die Luftmenge über die Stellung der Verschlußklappe gesteuert, und die Lamellen lenken den Luftstrom in die vom Benutzer gewünschte Richtung.

Vorteilhafterweise ist ferner ein Bedienelement am Luftaustritt angeordnet, welches mit der Verschlußklappe und mit den Lamellen derart gekoppelt ist, daß nach einer vorgegebenen Bewegung des Bedienelementes eine weitere Bewegung die Bewegung der Lamellen von der geschlossenen in die geöffnete Stellung bewirkt. Die Kopplung zwischen Bedienelement und Lamellen erfolgt vorzugsweise über eine Verbindung mit Spiel.

Die Verschlussklappe ist vorzugsweise drehbeweglich an der Luftzuführung des Luftausströmers angeordnet, um zwischen einer geschlossenen und einer geöffneten Stellung geschwenkt werden zu können, wobei die Verschlussklappe durch einen Hebel bewegt wird. Dieser Hebel ist dabei vorzugsweise über ein drehbewegliches Glied mit dem Bedienelement gekoppelt, so dass eine Bewegung des Bedienelementes eine Drehung der Verschlussklappe verursacht.

Weitere Ausgestaltungen der Erfindung und Vorteile sind der folgenden Beschreibung und den Zeichnungen zu entnehmen. Es zeigen:
- Fig. 1: eine perspektivische Ansicht eines Luftausströmers mit geschlossenen Lamellen;
- Fig. 2: eine perspektivische Ansicht des Luftausströmers aus Fig. 1 mit geöffneten Lamellen;
- Fig. 3: einen Querschnitt durch den Luftausströmer nach Fig. 1 mit geschlossenen Lamellen und geschlossener Verschlußklappe;
- Fig. 4: einen Querschnitt durch den Luftausströmer nach Fig. 1 mit geschlossenen Lamellen und geöffneter Verschlußklappe;
- Fig. 5: einen Querschnitt durch den Luftausströmer nach Fig. 1 mit geöffneten Lamellen und geöffneter Verschlußklappe;
- Fig. 6: einen Querschnitt durch den Bedienmechanismus der Verschlussklappe und der Lamellen eines Luftausströmers in der geschlossenen Stellung;
- Fig. 7: einen Querschnitt durch den Bedienmechanismus von Figur 6 in der geöffneten Stellung.

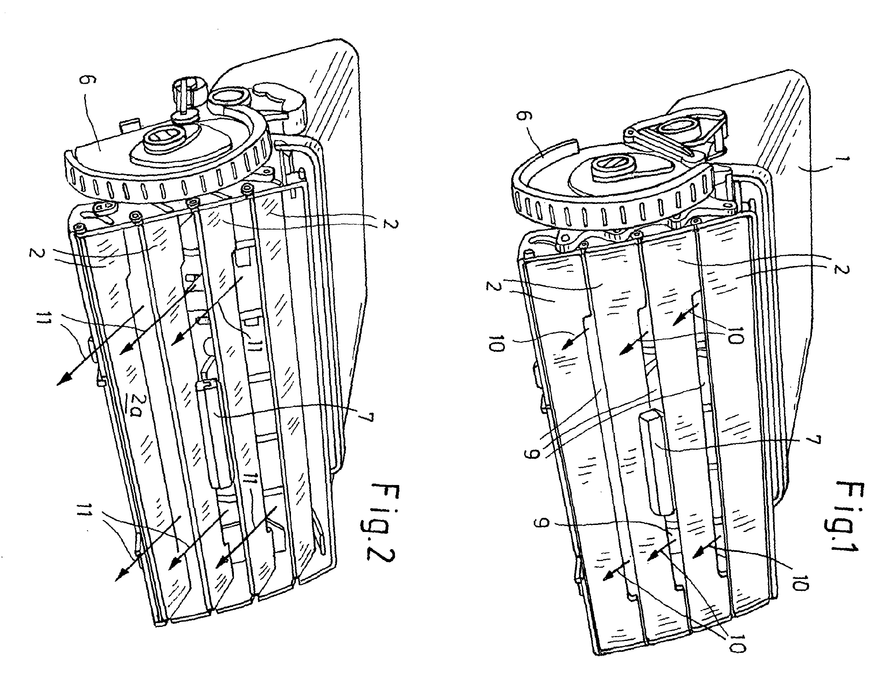

Der in den Fig. 1 bis Fig. 5 dargestellte Luftausströmer, der z.B. im Armaturenbrett eines Kraftfahrzeuges angeordnet sein kann, weist ein Gehäuse 1 und mehrere schwenkbar gelagerte Lamellen 2, die einen Luftaustritt 3 verschließen können, auf. Die Luftzufuhr in den Luftausströmer erfolgt über eine Luftzuführung 4, die aus einer geeigneten, nicht dargestellten Luftzuführeinrichtung gespeist wird. Zwischen Luftzuführung 4 und Luftaustritt 3 ist drehbar im Gehäuse 1 die Verschlußklappe 5 angeordnet, mit der die Luftzufuhr geregelt werden kann, und die mittels eines Bedienrades 6 gesteuert wird. Weiterhin ist ein Schieberegler 7 vor den Lamellen im Luftaustritt 3 angeordnet, mit dem vertikale Luftleitelemente 8 ausgerichtet werden können, so daß ein aus dem Luftaustritt 3 austretender Luftstrom in eine vom Benutzer gewünschte Richtung abgelenkt wird. Die drei unteren Lamellen 2 weisen in ihrem Mittelabschnitt 2a eine geringere Breite auf, wodurch zwischen den Lamellen 2 die Lüftungsöffnungen 9 gebildet sind.

In Fig. 1 sind die Lamellen 2 geschlossen. Eine geringe Luftmenge 10, dargestellt durch kleine Pfeile, tritt aus den Lüftungsöffnungen 9 aus. Wegen des geringen Querschnitts der Lüftungsöffnungen 9 relativ zum gesamten Querschnitt des Luftaustrittes 3 kann nur eine geringe Luftmenge 10 austreten. Dagegen sind in Fig. 2 die Lamellen 2 geöffnet, wodurch eine wesentlich größere Luftmenge 11, dargestellt durch große Pfeile, aus dem Luftaustritt 3 ausströmen kann.

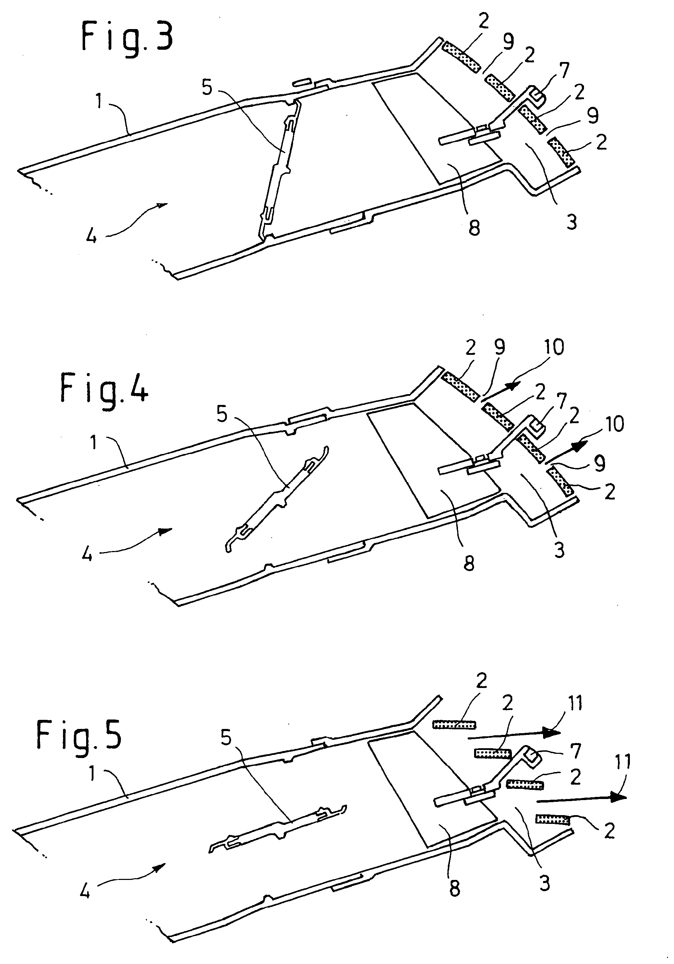

Fig. 3 zeigt den Querschnitt durch den Luftausströmer mit geschlossenen Lamellen 2 und geschlossener Verschlußklappe 5. In diesem Zustand kann überhaupt keine Luft aus dem Luftausströmer fließen. Eine solcher Zustand wird benötigt, wenn die Luftzufuhr über den Luftausströmer komplett unterbunden werden soll.

Fig. 4 zeigt den Querschnitt durch den Luftausströmer mit geschlossenen Lamellen 2 und geöffneter Verschlußklappe 5. Durch die zwischen den Lamellen 2 gebildeten Lüftungsöffnungen 9 kann eine bestimmte, geringe Luftmenge 10 austreten, die zusätzlich durch die Drehposition der Verschlußkappe 5 geregelt werden kann.

Fig. 5 schließlich zeigt den Querschnitt durch den Luftausströmer mit geöffneten Lamellen 2 und geöffneter Verschlußklappe 5. Dies entspricht der normalen Belüftungsstellung, wenn eine vom Benutzer gewünschte Luftmenge, u. a. geregelt durch die Verschlußklappe, durch den Luftaustritt strömt. Dabei kann die Richtung des Luftstromes in vertikaler Richtung durch die Stellung der Lamellen 2, und in horizontaler Richtung durch die Stellung der Luftleitelemente 8 vom Benutzer eingestellt werden.

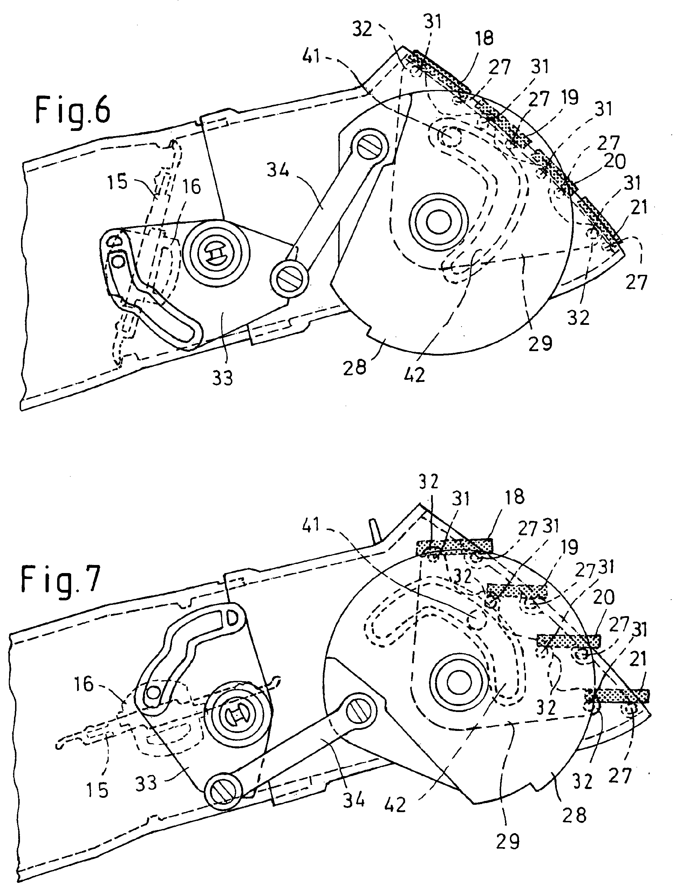

Die Figuren 6 und 7 zeigen in einer Querschnittsansicht den Bedienmechanismus der Verschlussklappe 15 und der Lamellen 18, 19, 20, 21 in der geschlossenen Stellung bzw. der geöffneten Stellung. Die Lamellen 18, 19, 20 und 21 sind jeweils über Zapfen 27 an ihrem unteren Kanten schwenkbar am Ausgang des Gehäuses gelagert. Ein ein Rad 28 umfassendes Bedienelement ist senkrecht auf der Außenseite des Gehäuses montiert und über einen Arm 29 mit entsprechenden Zapfen 31 an der oberen Kante der Lamellen gekoppelt. Der Arm 29 ist relativ zum Rad und Gehäuse koaxial zur Radachse drehbar und weist vier Flügel 32 auf, von denen jeder mit einem Zapfen 31 am oberen Rand der Lamellen verbunden ist. Eine Verbindung mit Spiel zwischen dem Arm 29 und dem Kontrollrad 28 sorgt dafür, daß das Kontrollrad 28 ohne Bewegung der Lamellen 18-21 ein bestimmtes Maß rotieren kann. Die Verbindung mit Spiel kann zum Beispiel von einem Zapfen 41 auf dem Arm 29 bereitgestellt werden, der in eine längliche Öffnung 42 im Kontrollrad eingreift. Jede weitere Drehbewegung über den vorbestimmten Drehwinkel hinaus veranlasst die Lamellen, sich um die Achse der Zapfen 27 zu drehen.

Das Regelventil 15 kann eine Klappe oder Scheibe umfassen, und die Achse 16 kann eine Spindel umfassen, die sich über die volle Breite des Gehäuses erstreckt, oder sie kann separate Spindelstümpfe umfassen, die auf jeder Seite der Klappe angeordnet sind. Die Spindel 16 erstreckt sich durch das Gehäuse und ist drehfest mit einem Hebel 33 verbunden, der schwenkbar außerhalb vom Gehäuse angebracht ist. Der Hebel 33 ist weiterhin über ein Glied 34 mit dem Kontrollrad 28 verbunden, wobei das Glied drehbar mit einem Ende des Hebels 33 und einem radial äußeren Teil des Kontrollrades gekoppelt ist. Eine Drehung des Kontrollrades 28 bewegt den Hebel 33, was wiederum das Ventil 15 um die Spindel 16 dreht.

Der Luftausströmer ist in Figur 6 in einem geschlossenen Zustand gezeigt. Wird das Kontrollrad 28 in den genannten vorbestimmten Grenzen gedreht, so öffnet die Klappe 15 teilweise durch Drehung des Hebels 33 über das Glied 34. Der Arm 29 bleibt ruhend und der Zapfen 41 bewegt sich entlang der Öffnung 42, während die Lamellen 18-21 geschlossen bleiben. In den Luftausströmer eintretende Luft verlässt den Auslass durch die Schlitze an den Oberkanten Lamellen 19-21, wodurch eine gehemmte Luftströmung erzeugt wird, die von einem Passagier als eine sanfte weiche Brise wahrgenommen werden kann.

Eine weitere Drehbewegung des Kontrollrades 28 in der gleichen Richtung über die vorbestimmten Grenzen hinaus verursacht eine weitere Öffnung der Klappe 15, und eine Drehbewegung des Arms 29 lässt die Lamellen 18-21 um die Zapfen 27 rotieren. Die oberen Kanten der Lamellen 18-21 werden von den Armen 29 nach innen bewegt, was eine Rotation der Lamellen im Uhrzeigersinn verursacht und zum Auftreten großer Spalte führt, wenn sich die ebenen Lamellen von einer im Wesentlichen vertikalen in eine im Wesentlichen horizontal Lage bewegen. In diesem Zustand ist der Luftausströmer vollständig offen, und die Luftleitelemente können benutzt werden, um die Luftströmung wie vom Passagier oder Fahrer des Fahrzeuges gewünscht zu lenken.

Die Erfindung stellt somit einen Luftausströmer dar, der sowohl eine normale Belüftung bei geöffneten Lamellen 2 mit gerichtetem Luftstrom und großer Luftmenge, und eine Belüftung bei geschlossenen Lamellen 2 mit ungerichtetem Luftstrom und geringer Luftmenge ermöglicht.

### Bezugszeichenliste:

- 1: Gehäuse
- 2, 18, 19, 20, 21: Lamellen
- 2a: mittlerer Lamellenbereich
- 3: Luftaustritt
- 4: Luftzuführung
- 5, 15: Verschlußklappe
- 6, 28: Bedienrad
- 7: Schieberegler
- 8: Luftleitelement
- 9: Lüftungsöffnung
- 10: Luftmenge (klein) 11 Luftmenge (groß)
- 16: Spindel
- 27: Zapfen
- 29: Arm
- 31: Zapfen
- 32: Flügel
- 33: Hebel
- 34: Glied
- 41: Zapfen
- 42: Öffnung

## Patentansprüche

1. Luftausströmer, insbesondere für einen Fahrzeuginnenraum, mit einem Luftaustritt (3), in dem Lamellen (2) schwenkbar angeordnet sind, wobei die Lamellen (2) in eine den Luftaustritt (3) schließende Stellung schwenkbar sind, und wobei
in geschlossener Stellung der Lamellen (2) zumindest eine Lüftungsöffnung (9) vorhanden ist, die nicht durch Lamellen (2) verschlossen ist, und wobei eine Lüftungsöffnung (9) gebildet wird, indem eine Lamelle (2) einen Bereich (2a) aufweist mit einer Breite, die kleiner ist als der von ihr zu verschließende Bereich des Luftaustritts (3) und/oder
daß eine Lüftungsöffnung (9) gebildet wird, indem eine Lamelle (2) kürzer ist als die Breite des Luftaustritts (3) im von der Lamelle (2) zu verschließenden Bereich des Luftaustritts (3),
**dadurch gekennzeichnet, daß**
eine Verschlußklappe (5, 15) zur Regelung der Luftzufuhr (10) zum Luftaustritt (3) vorhanden ist und ein Bedienelement (6, 28) am Luftaustritt (3) angeordnet ist, welches mit der Verschlußklappe (5, 15) und mit den Lamellen (2, 18-21) derart gekoppelt ist, daß nach einer vorgegebenen Bewegung des Bedienelementes (6, 28) eine weitere Bewegung die Überführung der Lamellen (2, 18-21) von der geschlossenen in die geöffnete Stellung bewirkt.

2. Luftausströmer nach Anspruch 1,
**dadurch gekennzeichnet, daß**
eine Lüftungsöffnung (9) durch eine Ausnehmung an einer Lamelle (2) gebildet ist.

3. Luftausströmer nach Anspruch 2,
**dadurch gekennzeichnet, daß**
eine Ausnehmung ein Loch in der Lamelle (2) mit beliebiger Berandung ist.

4. Luftausströmer nach einem der Ansprüche1 bis 3,
**dadurch gekennzeichnet, daß**
die Lamellen (2) überwiegend vertikal oder horizontal angeordnet sind.

5. Luftausströmer nach einem der vorherigen Ansprüche,
**dadurch gekennzeichnet, daß**
das Bedienelement (6, 28) mit den Lamellen (2, 18-21) über eine Verbindung mit Spiel gekoppelt ist.

6. Luftausströmer nach einem der vorherigen Ansprüche,
**dadurch gekennzeichnet, daß**
die Verschlußklappe (5, 15) drehbeweglich an der Luftzuführung (4) angeordnet ist und zwischen einer geschlossenen und einer geöffneten Stellung rotieren kann, wobei die Verschlussklappe (5, 15) durch einen Hebel (33) bewegt wird.

7. Luftausströmer nach Anspruch 6,
**dadurch gekennzeichnet, daß**
der Hebel (33) über ein drehbewegliches Glied (34) mit dem Bedienelement (6, 28) gekoppelt ist, so dass eine Bewegung des Bedienelementes (6, 28) eine Drehung der Verschlussklappe (5. 15) verursacht.

8. Luftausströmer nach einem der vorherigen Ansprüche,
wobei der Luftausströmer einen der folgenden Zustände aufweisen kann:
- Verschlußklappe (5) und Lamellen (2) geschlossen;
- Verschlußklappe (5) geöffnet, Lamellen (2) geschlossen; und
- Verschlußklappe (5) und Lamellen (2) geöffnet.

## Claims

1. Air vent, in particular for a vehicle interior, having an air outlet (3) in which slats (2) are arranged pivotably, it being possible for the slats (2) to be pivoted into a position closing the air outlet (3), and, in the closed position of the slats (2), there being at least one ventilation opening (9) which is not closed by slats (2), and a ventilation opening (9) being formed by a slat (2) having a region (2a) with a width which is smaller than that region of the air outlet (3) which is to be closed by it, and/or a ventilation opening (9) being formed by a slat (2) being shorter than the width of the air outlet (3) in that region of the air outlet (3) which is to be closed by the slat (2), **characterized in that** there is a closure flap (5, 15) for regulating the air supply (10) to the air outlet (3) and an operating element (6, 28) is arranged on the air outlet (3), said operating element being coupled to the closure flap (5, 15) and to the slats (2, 18-21) in such a manner that, after a predetermined movement of the operating element (6, 28), a further movement causes the slats (2, 18-21) to be transferred from the closed position into the open position.

2. Air vent according to Claim 1, **characterized in that** a ventilation opening (9) is formed by a recess on a slat (2).

3. Air vent according to Claim 2, **characterized in that** a recess is a hole having any desired boundary edge in the slat (2).

4. Air vent according to one of Claims 1 to 3, **characterized in that** the slats (2) are arranged predominantly vertically or horizontally.

5. Air vent according to one of the preceding claims, **characterized in that** the operating element (6, 28) is coupled to the slats (2, 18-21) via a connection with play.

6. Air vent according to one of the preceding claims, **characterized in that** the closure flap (5, 15) is arranged rotatably on the air supply (4) and can be rotated between a closed and an open position, the closure flap (5, 15) being moved by a lever (33).

7. Air vent according to Claim 6, **characterized in that** the lever (33) is coupled to the operating element (6, 28) via a rotatable element (34), so that a movement of the operating element (6, 28) causes a rotation of the closure flap (5, 15).

8. Air vent according to one of the preceding claims, it being possible for the air vent to have one of the following states:
- closure flap (5) and slats (2) closed;
- closure flap (5) open, slats (2) closed; and
- closure flap (5) and slats (2) open.

## Revendications

1. Buse de sortie d'air, en particulier pour un habitacle d'un véhicule automobile, comprenant une sortie d'air (3), dans laquelle des lamelles (2) sont disposées de manière pivotante, les lamelles (2) pouvant pivoter dans une position fermant la sortie d'air (3), et
dans la position fermée des lamelles (2), au moins une ouverture d'aération (9) étant prévue, laquelle n'est pas fermée par les lamelles (2), et une ouverture d'aération (9) étant formée par le fait qu'une lamelle (2) présente une région (2a) ayant une plus petite largeur que la région de la sortie d'air (3) qu'elle doit fermer, et/ou
une ouverture d'aération (9) étant formée par le fait qu'une lamelle (2) est plus courte que la largeur de la sortie d'air (3) dans la région de la sortie d'air (3) à fermer par la lamelle (2),
**caractérisée en ce que**
l'on prévoit un clapet de fermeture (5, 15) pour réguler l'alimentation en air (10) à la sortie d'air (3) et un élément de commande (6, 28) est disposé au niveau de la sortie d'air (3), lequel est accouplé au clapet de fermeture (5, 15) et aux lamelles (2, 18-21) de telle sorte qu'après un déplacement prédéfini de l'élément de commande (6, 28), un autre déplacement provoque le transfert des lamelles (2, 18-21) de la position fermée dans la position ouverte.

2. Buse de sortie d'air selon la revendication 1,
**caractérisée en ce**
**qu'**une ouverture d'aération (9) est formée par un évidement au niveau d'une lamelle (2).

3. Buse de sortie d'air selon la revendication 2,
**caractérisée en ce**
**qu'**un évidement est un trou dans la lamelle (2), avec un bord quelconque.

4. Buse de sortie d'air selon l'une quelconque des revendications 1 à 3,
**caractérisée en ce que**
les lamelles (2) sont disposées substantiellement verticalement ou horizontalement.

5. Buse de sortie d'air selon l'une quelconque des revendications précédentes,
**caractérisée en ce que**
l'élément de commande (6, 28) est accouplé aux lamelles (2, 18-21) par le biais d'une connexion avec un certain jeu.

6. Buse de sortie d'air selon l'une quelconque des revendications précédentes,
**caractérisée en ce que**
le clapet de fermeture (5, 15) est disposé de manière mobile en rotation au niveau de l'alimentation en air (4) et peut tourner entre une position fermée et une position ouverte, le clapet de fermeture (5, 15) étant déplacé par un levier (33).

7. Buse de sortie d'air selon la revendication 6,
**caractérisée en ce que**
le levier (33) est accouplé par le biais d'un organe mobile en rotation (34) à l'élément de commande (6, 28), de sorte qu'un déplacement de l'élément de commande (6, 28) provoque une rotation du clapet de fermeture (5, 15).

8. Buse de sortie d'air selon l'une quelconque des revendications précédentes,
dans laquelle la buse de sortie d'air peut présenter l'un des états suivants :
- clapet de fermeture (5) et lamelles (2) fermés ;
- clapet de fermeture (5) ouvert, lamelles (2) fermées ; et
- clapet de fermeture (5) et lamelles (2) ouverts.
